# EUROPEAN PATENT APPLICATION

(11) **EP 4 807 074 A1**
(43) Date of publication of application: **16.09.2026**
(21) Application number: 24888390.2
(22) Date of filing: 11.09.2024
(51) Int. Cl.: D06M 15/643, B60R 21/235, C08L 83/04

(54) **ADDITION CURING TYPE LIQUID SILICONE RUBBER COMPOSITION FOR AIRBAG, AND AIRBAG**

(30) Priority: 09.11.2023 JP 2023191307
(71) Applicant: SHIN-ETSU CHEMICAL CO., LTD., Tokyo 100-0005 (JP)
(72) Inventor: ASHIDA Ryo, Annaka-shi, Gunma 379-0224 (JP); UBUKATA Shigeru, Annaka-shi, Gunma 379-0224 (JP)
(74) Representative: Schicker, Silvia
(86) International application number: PCT/JP2024/032540
(87) International publication number: WO 2025/100090

(57) **Abstract**

The present invention is an addition-curable liquid silicone rubber composition for an airbag, the composition containing the following components (A) to (G) as essential components: (A) an organopolysiloxane having two or more alkenyl groups bonded to a silicon atom per molecule and having a polymerization degree of 50 to 2,000; (B) a powdery organopolysiloxane resin having a three-dimensional network structure; (C) an organohydrogenpolysiloxane having two or more hydrosilyl groups per molecule; (D) a silica fine powder having a BET-method specific surface area of 50 m²/g or more: 1 to 50 parts by mass; (E) a catalyst for a hydrosilylation reaction; (F) an organosilicon compound having, in one molecule, one or more functional groups selected from an epoxy group, an isocyanate group, a (meth)acryl group, and an isocyanurate-ring-containing organic group and having one or more functional groups selected from a hydrosilyl group, an alkoxysilyl group, a hydroxysilyl group, and a vinyl group; and (G) an organic compound having one or more epoxy groups per molecule and having no hydrosilyl group and no alkoxysilyl group. Accordingly, an addition-curable liquid silicone rubber composition for an airbag having excellent flame retardancy and an airbag having a cured coating using this composition are provided.

## Description

### TECHNICAL FIELD

The present invention relates to an addition-curable liquid silicone rubber composition for an airbag, and an airbag.

### BACKGROUND ART

An airbag having a silicone rubber coating has excellent internal pressure retainability and a low combustion rate, and is therefore conventionally used suitably as an airbag for automobiles, etc. As a means for improving flame retardancy of the silicone rubber for an airbag, disclosed is a method of blending a silicone resin that is composed of M, D, and Q units and that has a crosslinkable functional group in only the D unit, as a flame retardant (Patent Document 1). An airbag coated with this composition is characterized by slow combustion speed.

Meanwhile, for space saving and weight reduction, coating mass of the silicone rubber composition tends to be reduced. Thus, the silicone rubber composition is required to have flame retardancy and adhesiveness to a base fabric equivalent to conventional ones even at a low coating mass. Common methods for improving the flame retardancy include a method of blending a flame retardant. For example, disclosed are a composition in which iron (III) oxide monohydrate or α-iron (III) oxide is blended as the flame retardant into a silicone rubber composition (Patent Document 2) etc. However, blending the solid inorganic compound as the flame retardant into the silicone rubber composition may cause various defects in manufacturing an airbag. In addition, to improve the adhesiveness to a base fabric, known is a composition in which an organopolysiloxane having a plurality of hydrosilyl groups and epoxy groups per molecule is blended into a silicone rubber composition (Patent Documents 3 and 4). This composition has specifically excellent adhesiveness after a humidity and heat resistance test, but an effect on flame retardancy of the organopolysiloxane is not clearly described in these documents.

### CITATION LIST

### PATENT LITERATURE

Patent Document 1: WO 2018/168315
Patent Document 2: JP 2022-072086 A
Patent Document 3: JP 2020-147686 A
Patent Document 4: JP 2018-531303 A

### SUMMARY OF INVENTION

### TECHNICAL PROBLEM

The present invention has been made in view of the above circumstances. An object of the present invention is to provide an addition-curable liquid silicone rubber composition for an airbag having excellent flame retardancy, and an airbag having a cured coating using this composition.

### SOLUTION TO PROBLEM

To solve the above problem, the present invention provides an addition-curable liquid silicone rubber composition for an airbag, the composition comprising the following components (A) to (G) as essential components:
(A) an organopolysiloxane having two or more alkenyl groups bonded to a silicon atom per molecule and having a polymerization degree of 50 to 2,000: 100 parts by mass;
(B) a powdery organopolysiloxane resin having a three-dimensional network structure: 0.1 to 100 parts by mass;
(C) an organohydrogenpolysiloxane having two or more hydrosilyl groups per molecule: such that an amount of the hydrosilyl groups contained in the component (C) is 1 to 10 mol per mole of total silicon-atom-bonded alkenyl groups contained in the composition;
(D) a silica fine powder having a BET-method specific surface area of 50 m²/g or more: 1 to 50 parts by mass;
(E) a catalyst for a hydrosilylation reaction: 1 to 500 ppm in terms of a mass based on blending mass of (A) of the catalyst metal element;
(F) an organosilicon compound having, in one molecule, one or more functional groups selected from an epoxy group, an isocyanate group, a (meth)acryl group, and an isocyanurate-ring-containing organic group, and having one or more functional groups selected from a hydrosilyl group, an alkoxysilyl group, a hydroxysilyl group, and a vinyl group: 0.1 to 10 parts by mass; and
(G) an organic compound having one or more epoxy groups per molecule and having no hydrosilyl group and no alkoxysilyl group: 0.1 to 10 parts by mass.

A silicone-coated base fabric of the airbag having a cured coating using the addition-curable liquid silicone rubber composition for an airbag of the present invention has excellent flame retardancy.

In the addition-curable liquid silicone rubber composition for an airbag of the present invention, the component (G) is preferably one or more selected from: a dehydration condensation product between an alcohol having a hydrocarbon group having 1 to 20 carbon atoms as a substituent and glycidyl alcohol; a dehydrochlorination product between an alcohol having a hydrocarbon group having 1 to 20 carbon atoms as a substituent and epichlorohydrin; a dehydration condensation product between a phenolic hydroxy group having a hydrocarbon group having 6 to 20 carbon atoms as a substituent and glycidyl alcohol; a dehydrochlorination product between a phenolic hydroxy group having a hydrocarbon group having 6 to 20 carbon atoms as a substituent and epichlorohydrin; 1,4-butanediol diglycidyl ether; 1,6-hexanediol diglycidyl ether; neopentyl glycol diglycidyl ether; bisphenol A diglycidyl ether; 1,3,5-tris(2,3-epoxypropyl)-1,3,5-triazine-2,4,6(1H,3H,5H)-trione; a homopolymer or a copolymer of the epoxy compound; and a modified novolac-type epoxy resin.

According to such an addition-curable liquid silicone rubber composition for an airbag of the present invention containing the component (G), a silicone-coated base fabric of the airbag manufactured therewith has excellent flame retardancy.

Further, in the addition-curable liquid silicone rubber composition for an airbag of the present invention, the component (G) is preferably an organopolysiloxane having an epoxy group that is represented by the following formula (1) or (2): 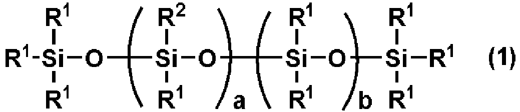 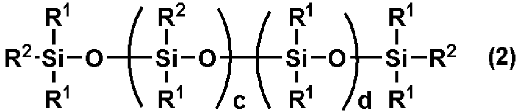 wherein R¹ each independently represents a hydrocarbon group having 1 to 10 carbon atoms, R² each independently represents an epoxy-containing group represented by the following formula (3) or (4), "a" represents an integer of 1 to 200, and "b", "c", and "d" each represent an integer of 0 to 200.

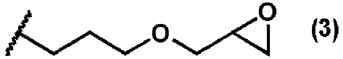

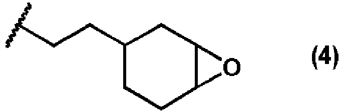

According to the addition-curable liquid silicone rubber composition for an airbag of the present invention containing the component (G) as described above, a silicone-coated base fabric of the airbag manufactured therewith has excellent flame retardancy.

The addition-curable liquid silicone rubber composition for an airbag of the present invention preferably comprises, as a component (H), one or more condensation catalysts selected from an organotitanium compound, an organozirconium compound, and an organoaluminum compound in an amount of 0.05 to 5 parts by mass based on 100 parts by mass of the component (A).

The addition-curable liquid silicone rubber composition for an airbag of the present invention as above has more excellent adhesiveness of a silicone rubber layer (a cured coating) to a base fabric of the airbag.

Further, the present invention provides an airbag comprising a cured coating of the addition-curable liquid silicone rubber composition for an airbag of the present invention on a base fabric of the airbag.

The airbag as described above has excellent flame retardancy, and is suitably used as an airbag for automobiles, etc.

### ADVANTAGEOUS EFFECTS OF INVENTION

As described above, the present invention can provide an addition-curable liquid silicone rubber composition for an airbag having excellent flame retardancy by applying and curing the composition on the base fabric of the airbag, and an airbag.

### DESCRIPTION OF EMBODIMENTS

As described above, there has been a demand for development of an addition-curable liquid silicone rubber composition for an airbag having excellent flame retardancy and an airbag having a cured coating using this composition.

As a result of earnest studies to solve the above problem, the present inventors have found that an addition-curable liquid silicone rubber composition for an airbag containing an organic compound having one or more epoxy groups per molecule and having no hydroxysilyl group and no alkoxysilyl group provides excellent flame retardancy of a base fabric of the airbag (a silicone-rubber-coated base fabric of the airbag) when applied and cured on a base fabric of the airbag. This finding has led to completion of the present invention.

Specifically, the present invention is an addition-curable liquid silicone rubber composition for an airbag, the composition containing the following components (A) to (G) as essential components:
(A) an organopolysiloxane having two or more alkenyl groups bonded to a silicon atom per molecule and having a polymerization degree of 50 to 2,000: 100 parts by mass;
(B) a powdery organopolysiloxane resin having a three-dimensional network structure: 0.1 to 100 parts by mass;
(C) an organohydrogenpolysiloxane having two or more hydrosilyl groups per molecule: such that an amount of the hydrosilyl groups contained in the component (C) is 1 to 10 mol per mole of total silicon-atom-bonded alkenyl groups contained in the composition;
(D) a silica fine powder having a BET-method specific surface area of 50 m²/g or more: 1 to 50 parts by mass;
(E) a catalyst for a hydrosilylation reaction: 1 to 500 ppm in terms of a mass based on blending mass of (A) of the catalyst metal element;
(F) an organosilicon compound having, in one molecule, one or more functional groups selected from an epoxy group, an isocyanate group, a (meth)acryl group, and an isocyanurate-ring-containing organic group, and having one or more functional groups selected from a hydrosilyl group, an alkoxysilyl group, a hydroxysilyl group, and a vinyl group: 0.1 to 10 parts by mass; and
(G) an organic compound having one or more epoxy groups per molecule and having no hydrosilyl group and no alkoxysilyl group: 0.1 to 10 parts by mass.

Hereinafter, the present invention will be described in detail, but the present invention is not limited thereto.

Note that a viscosity herein is a value measured at 25°C by a method described in JIS K 7117-1:1999 with a rotary viscosimeter. In addition, a weight average polymerization degree is a value determined as a weight average molecular weight in terms of polystyrene (a weight average polymerization degree) measured under the following conditions by gel permeation chromatography (GPC) using tetrahydrofuran (THF) as a developing solvent.

### [Measurement conditions]

Developing solvent: tetrahydrofuran
Flow rate: 0.35 mL/min
Detector: differential refractive index detector (RI)
Column: TSK Guardcolumn SuperH-L
TSKgel SuperH4000 (6.0 mm I.D. × 15 cm × 1)
TSKgel SuperH3000 (6.0 mm I.D. × 15 cm × 1)
TSKgel SuperH2000 (6.0 mm I.D. × 15 cm × 2)
(all the above are manufactured by Tosoh Corporation)
Column temperature: 40°C
Sample injection amount: 10 µL (a tetrahydrofuran solution at a concentration of 0.5 wt%)

### <Addition-curable liquid silicone rubber composition for airbag>

The addition-curable liquid silicone rubber composition for an airbag of the present invention contains the following components (A) to (G) as essential components:
(A) an organopolysiloxane having two or more alkenyl groups bonded to a silicon atom per molecule and having a polymerization degree of 50 to 2,000: 100 parts by mass;
(B) a powdery organopolysiloxane resin having a three-dimensional network structure: 0.1 to 100 parts by mass;
(C) an organohydrogenpolysiloxane having two or more hydrosilyl groups per molecule: such that an amount of the hydrosilyl groups contained in the component (C) is 1 to 10 mol per mole of total silicon-atom-bonded alkenyl groups contained in the composition;
(D) a silica fine powder having a BET-method specific surface area of 50 m²/g or more: 1 to 50 parts by mass;
(E) a catalyst for a hydrosilylation reaction: 1 to 500 ppm in terms of a mass based on blending mass of (A) of the catalyst metal element;
(F) an organosilicon compound having, in one molecule, one or more functional groups selected from an epoxy group, an isocyanate group, a (meth)acryl group, and an isocyanurate-ring-containing organic group, and having one or more functional groups selected from a hydrosilyl group, an alkoxysilyl group, a hydroxysilyl group, and a vinyl group: 0.1 to 10 parts by mass; and
(G) an organic compound having one or more epoxy groups per molecule and having no hydrosilyl group and no alkoxysilyl group: 0.1 to 10 parts by mass.

### [Component (A)]

In the present invention, the organopolysiloxane of the component (A) is an organopolysiloxane having two or more alkenyl groups bonded to a silicon atom per molecule and having a polymerization degree of 50 to 2,000, and is a base polymer (a main agent) in the addition-curable liquid silicone rubber composition for an airbag according to the present invention. A polymerization degree of less than 50 may deteriorate mechanical strength of the resulting silicone rubber coating, and a polymerization degree of more than 2,000 increases viscosity of the resulting composition, which may deteriorate coating operability.

In addition, a molecular structure of the component (A) is preferably linear. Specifically, the component (A) is preferably a diorganopolysiloxane in which the main chain is basically composed of repetition of a diorganosiloxane unit and both the terminals of the molecular chain are blocked with a triorganosiloxy group. In addition, a position of the silicon atom to which the alkenyl group is bonded in the molecule of the linear organopolysiloxane of the component (A) may be either or both of the molecular chain terminals (namely, the triorganosiloxy groups) and the middle of the molecular chain (namely, the bifunctional diorganosiloxane unit positioned at the non-terminal of the molecular chain). As the component (A), a linear diorganopolysiloxane having alkenyl groups bonded to a silicon atom at at least both the terminals of the molecular chain is particularly preferable.

Examples of the alkenyl group bonded to a silicon atom in the component (A) include those typically having 2 to 8 carbon atoms, and preferably 2 to 4 carbon atoms. Specific examples thereof include a vinyl group, an allyl group, a propenyl group, a butenyl group, a pentenyl group, a hexenyl group, a cyclohexenyl group, and a heptenyl group, and a vinyl group is particularly preferable.

The number of the alkenyl groups bonded to a silicon atom in the component (A) is 2 or more per molecule, preferably 2 to 100, and more preferably 2 to 50. The number of the alkenyl groups of less than 2 may deteriorate mechanical strength of the resulting silicone rubber coating, which is not preferred.

Examples of a monovalent hydrocarbon group bonded to a silicon atom other than the alkenyl group in the component (A) include a monovalent hydrocarbon group having typically 1 to 12 carbon atoms, and preferably 1 to 10 carbon atoms. Specific examples of the monovalent hydrocarbon group include: alkyl groups such as a methyl group, an ethyl group, a propyl group, a butyl group, a pentyl group, a hexyl group, a cyclohexyl group, and a heptyl group; aryl groups such as a phenyl group, a tolyl group, a xylyl group, and a naphthyl group; and aralkyl groups such as a benzyl group and a phenethyl group. Note that a group in which some hydrogen atoms in these substituents are substituted with halogen atoms such as a fluorine atom may be used. Among these monovalent hydrocarbon groups, a methyl group is preferable.

A weight average polymerization degree of the component (A) is 50 to 2,000, preferably 100 to 1,500, and more preferably 120 to 1,000. A weight average polymerization degree of less than 50 deteriorates mechanical properties of the resulting silicone rubber coating. In addition, a weight average polymerization degree of more than 2,000 increases viscosity of the resulting composition, which deteriorates coating operability.

The viscosity of the component (A) is preferably 50 to 200,000 mPa·s, more preferably 100 to 150,000 mPa·s, and further preferably 400 to 100,000 mPa·s at 25°C. A viscosity of the component (A) of 50 mPa·s or more yields good mechanical properties of the resulting silicone rubber coating. A viscosity of 200,000 mPa·s or less does not increase the viscosity of the resulting composition, which also yields preferable coating operability.

Specific examples of the organopolysiloxane of the component (A) include: one selected from dimethylsiloxane-methylvinylsiloxane copolymer blocked at both terminals of the molecular chain with trimethylsiloxy groups, methylvinylpolysiloxane blocked at both terminals of the molecular chain with trimethylsiloxy groups, dimethylsiloxane-methylvinylsiloxane-methylphenylsiloxane copolymer blocked at both terminals of the molecular chain with trimethylsiloxy groups, dimethylpolysiloxane blocked at both terminals of the molecular chain with dimethylvinylsiloxy groups, methylvinylpolysiloxane blocked at both terminals of the molecular chain with dimethylvinylsiloxy groups, dimethylsiloxane-methylvinylsiloxane copolymer blocked at both terminals of the molecular chain with dimethylvinylsiloxy groups, dimethylsiloxane-methylvinylsiloxane-methylphenylsiloxane copolymer blocked at both terminals of the molecular chain with dimethylvinylsiloxy groups, dimethylpolysiloxane blocked at both terminals of the molecular chain with divinylmethylsiloxy groups, dimethylsiloxane-methylvinylsiloxane copolymer blocked at both terminals of the molecular chain with divinylmethylsiloxy groups, dimethylpolysiloxane blocked at both terminals of the molecular chain with trivinylsiloxy groups, and dimethylsiloxane-methylvinylsiloxane copolymer blocked at both terminals of the molecular chain with trivinylsiloxy groups; or a mixture of two or more of these organopolysiloxanes.

As the organopolysiloxane of the component (A), one kind thereof may be used singly, or a combination of two or more thereof may be used.

### [Component (B)]

The powdery organopolysiloxane resin having a three-dimensional network structure of the component (B) (provided that the organopolysiloxane resin has no hydrosilyl group) acts as a flame retardancy improver. It is preferable that the component (B) be basically constituted of one or more branched siloxane units selected from a trifunctional R³SiO_{3/2} unit and a tetrafunctional SiO_{4/2} unit. The component (B) may optionally have a monofunctional R³₃SiO_{1/2} unit and/or a bifunctional R³₂SiO_{2/2} unit as necessary. Provided that this organopolysiloxane resin has no hydrosilyl group (a hydrogen atom bonded to a silicon atom) in the molecule. In addition, this organopolysiloxane resin has a three-dimensional network (resin-like) structure and is powder at 25°C, thereby being clearly distinguished from the component (A) having the linear structure.

The R³ independently represents a monovalent hydrocarbon group having 1 to 10, preferably 1 to 8, carbon atoms. Examples thereof include the groups same as the alkenyl groups and the monovalent hydrocarbon groups that are exemplified in the component (A). Specific examples thereof include: alkyl groups such as a methyl group, an ethyl group, a propyl group, a butyl group, a pentyl group, a hexyl group, a cyclohexyl group, and a heptyl group; alkenyl groups such as a vinyl group, an allyl group, a propenyl group, a butenyl group, a pentenyl group, a hexenyl group, a cyclohexenyl group, and a heptenyl group; aryl groups such as a phenyl group, a tolyl group, a xylyl group, and a naphthyl group; and aralkyl groups such as a benzyl group and a phenethyl group. Note that a group in which some hydrogen atoms in these substituents are substituted with halogen atoms such as a fluorine atom may be used. Among these, a methyl group and a vinyl group are preferable.

A content of the alkenyl groups bonded to a silicon atom in the component (B) is preferably 0 to 10 mol%, and particularly preferably 2 to 8 mol% based on all substituents bonded to a silicon atom.

For forming the three-dimensional network structure, the organopolysiloxane resin of the component (B) has one or more siloxane units selected from the R³SiO_{3/2} unit and the SiO_{4/2} unit. A total amount thereof is preferably 20 to 75 mol%, and particularly preferably 30 to 65 mol% in the organopolysiloxane resin of the component (B). The amount within this range yields a sufficient flame retardancy improving effect, which is preferable.

Here, the organopolysiloxane resin of the component (B) may optionally have the R³₃SiO_{1/2} unit and/or the R³₂SiO_{2/2} unit as noted above. A total content thereof is preferably 0 to 70 mol%, and particularly preferably 0 to 50 mol% in the organopolysiloxane resin of the component (B).

In addition, a weight average molecular weight of the organopolysiloxane resin of the component (B) is preferably within a range of 2,000 to 50,000, and particularly preferably 4,000 to 20,000. A weight average molecular weight within the range of 2,000 to 50,000 yields a sufficient flame retardancy improving effect and viscosity suitable for coating operability.

Specific examples of the organopolysiloxane resin of the component (B) include: one selected from an organosiloxane copolymer composed of a siloxane unit represented by a formula R'₃SiO_{1/2}, a siloxane unit represented by a formula R'₂R"SiO_{1/2}, a siloxane unit represented by a formula R'₂SiO_{2/2}, and a siloxane unit represented by a formula SiO_{4/2}, an organosiloxane copolymer composed of a siloxane unit represented by a formula R'₃SiO_{1/2}, a siloxane unit represented by a formula R'₂R"SiO_{1/2}, and a siloxane unit represented by a formula SiO_{4/2}, an organosiloxane copolymer composed of a siloxane unit represented by a formula R'₂R"SiO_{1/2}, a siloxane unit represented by a formula R'₂SiO_{2/2}, and a siloxane unit represented by a formula SiO_{4/2}, and an organosiloxane copolymer composed of a siloxane unit represented by a formula R'R"SiO_{2/2}, and a siloxane unit represented by a formula R'SiO_{3/2} or a siloxane unit represented by a formula R"SiO_{3/2}; or a mixture compose of two or more of these organopolysiloxanes.

R' in the formulae independently represents a group selected from an alkyl group having 1 to 10, preferably 1 to 8, carbon atoms, an aryl group having 6 to 10, preferably 6 to 8, carbon atoms, and an aralkyl group having 7 to 10, preferably 7 or 8, carbon atoms. Examples thereof include: alkyl groups such as a methyl group, an ethyl group, a propyl group, a butyl group, a pentyl group, a hexyl group, a cyclohexyl group, and a heptyl group; aryl groups such as a phenyl group, a tolyl group, a xylyl group, and a naphthyl group; aralkyl groups such as a benzyl group and a phenethyl group; and halogenated alkyl groups such as a chloromethyl group, a 3-chloropropyl group, and a 3,3,3-trifluoropropyl group. Among these, a methyl group is particularly preferable. In addition, R" in the formulae represents an alkenyl group having 2 to 10, preferably 2 to 8, carbon atoms. Examples thereof include a vinyl group, an allyl group, a butenyl group, a pentenyl group, a hexenyl group, and a heptenyl group, and a vinyl group is particularly preferable.

A blending amount of the component (B) is 0.1 to 100 parts by mass, preferably 3 to 75 parts by mass, and particularly preferably 5 to 60 parts by mass based on 100 parts by mass of the organopolysiloxane of the component (A). A blending amount within the range of 0.1 to 100 parts by mass yields a sufficient flame retardancy improving effect, which yields excellent cost-effectiveness. A blending amount of less than 0.1 part by mass may fail to provide the sufficient flame retardancy improving effect, and a blending amount of more than 100 parts by mass may increase viscosity of the composition to deteriorate coating operability, which are not preferred.

The organopolysiloxane resin having a three-dimensional network structure of the component (B) may be used singly or in combination of two or more thereof.

### [Component (C)]

The component (C) is an organohydrogenpolysiloxane having two or more hydrosilyl groups per molecule, and acts as a crosslinker for the present composition.

The molecular structure of the organohydrogenpolysiloxane of the component (C) may be any of linear, cyclic, branched, and three-dimensional network structures. In this case, those having a number of silicon atoms per molecule (or a polymerization degree) of 2 to 300, particularly 4 to 200, and being liquid at 25°C, are preferably used. In addition, the number of the hydrosilyl groups contained per molecule is 2 or more, preferably 2 to 200, more preferably 2 to 150, and further preferably 2 to 100. Note that the hydrosilyl group may be present on the terminal of the molecular chain, on the side chain (the middle of the molecular chain), or on both thereof.

Examples of a substituent bonded to a silicon atom in the component (C) include a monovalent hydrocarbon group having typically 1 to 12, preferably 1 to 10, carbon atoms. Specific examples of the monovalent hydrocarbon group include: alkyl groups such as a methyl group, an ethyl group, a propyl group, a butyl group, a pentyl group, a hexyl group, a cyclohexyl group, and a heptyl group; aryl groups such as a phenyl group, a tolyl group, a xylyl group, and a naphthyl group; and aralkyl groups such as a benzyl group and a phenethyl group. Note that a group in which some hydrogen atoms in these substituents are substituted with halogen atoms such as a fluorine atom may be used. Among these, a methyl group and a phenyl group are preferable.

Examples of the organohydrogenpolysiloxane as above include 1,1,3,3-tetramethyldisiloxane, 1,3,5,7-tetramethylcyclotetrasiloxane, methylhydrogencyclopolysiloxane, methylhydrogensiloxane-dimethylsiloxane cyclic copolymer, tris(dimethylhydrogensiloxy)methylsilane, tris(dimethylhydrogensiloxy)phenylsilane, methylhydrogenpolysiloxane blocked at both terminals with trimethylsiloxy groups, dimethylsiloxane-methylhydrogensiloxane copolymer blocked at both terminals with trimethylsiloxy groups, dimethylpolysiloxane blocked at both terminals with dimethylhydrogensiloxy groups, dimethylsiloxane-methylhydrogensiloxane copolymer blocked at both terminals with dimethylhydrogensiloxy groups, methylhydrogensiloxane-diphenylsiloxane copolymer blocked at both terminals with trimethylsiloxy groups, methylhydrogensiloxane-diphenylsiloxane-dimethylsiloxane copolymer blocked at both terminals with trimethylsiloxy groups, cyclic methylhydrogenpolysiloxane, cyclic methylhydrogensiloxane-dimethylsiloxane copolymer, cyclic methylhydrogensiloxane-diphenylsiloxane-dimethylsiloxane copolymer, a copolymer composed of a (CH₃)₂HSiO_{1/2} unit and a SiO_{4/2} unit, a copolymer composed of a (CH₃)₂HSiO_{1/2} unit, a SiO_{4/2} unit, and a (C₆H₅)SiO_{3/2} unit, and an organohydrogenpolysiloxane in which a part or all of methyl groups in the above example compounds are substituted with another alkyl group such as an ethyl group and a propyl group or an aryl group such as a phenyl group. In addition, specific examples of the organohydrogenpolysiloxane as above include compounds represented by the following formulae.

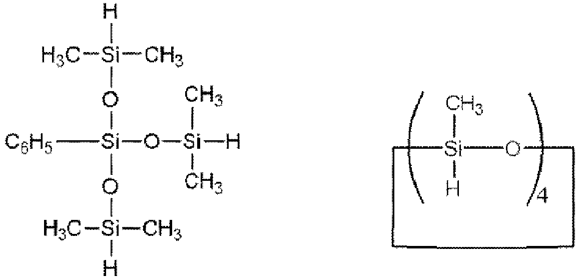

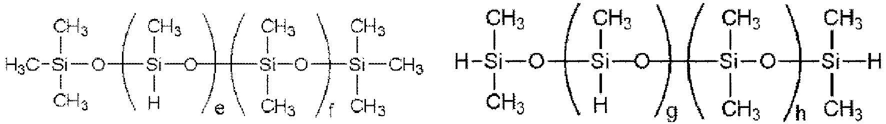

In the formulae, "e" represents an integer of 2 to 200, and "f", "g", and "h" each represent an integer of 0 to 200.

This organohydrogenpolysiloxane has a viscosity at 25°C of preferably 0.5 to 10,000 mPa·s, and particularly preferably 1 to 300 mPa·s.

A blending amount of the component (C) is an amount such that total hydrosilyl groups contained in the composition of the present invention is 1 to 10 mol, preferably 1.2 to 9 mol (or groups), and more preferably 1.5 to 8 mol (or groups) per mole of total silicon-atom-bonded alkenyl groups contained in the composition of the present invention. If the amount of the hydrosilyl groups contained in the composition including the component (C) is less than 1 mol based on 1 mol of total alkenyl groups bonded to a silicon atom contained in the component (A) and the component (B), the addition-curable liquid silicone rubber composition for an airbag is not sufficiently cured. If this amount is more than 10 mol, the cured silicone rubber obtained from the addition-curable liquid silicone rubber composition for an airbag may considerably deteriorate heat resistance.

As the organohydrogenpolysiloxane of the component (C), one kind thereof may be used singly, or a combination of two or more thereof may be used.

### [Component (D)]

The silica fine powder of the component (D) having a BET-method specific surface area of 50 m²/g or more acts as a reinforcing filler. That is, the silica fine powder imparts strength to the cured silicone rubber obtained from the addition-curable liquid silicone rubber composition for an airbag according to the present invention, and use of the silica fine powder as the reinforcing filler enables formation of a coating film satisfying strength required in the present invention. The silica fine powder has a specific surface area by a BET method of 50 m²/g or more, preferably 50 to 400 m²/g, or may be more preferably 100 to 300 m²/g. A specific area of less than 50 m²/g cannot impart mechanical strength properties satisfactory as the coating agent for an airbag.

The silica fine powder as above may be known powder conventionally used as a reinforcing filler for a cured silicone rubber as long as the requirements of the specific surface area are within the above range. Examples thereof include aerosol silica (fumed silica) and precipitated silica (wet silica).

As the silica fine powder, silica fine powder in which the surface is subjected to a hydrophobizing treatment with a surface-treating agent such as a (typically hydrolysable) organosilicon compound such as, for example, chlorosilane, an alkoxysilane, and an organosilazane may be used. In this case, these silica fine powders may be directly subjected to the surface-hydrophobizing treatment with the surface-treating agent in the powder state in advance for use. In addition, the surface-treating agent may be added during kneading with silicone oil (for example, the organopolysiloxane having the alkenyl groups of the component (A) and being oily) for the surface-hydrophobizing treatment for use.

Examples of the method for treating the component (D) include a surface treatment by a known technique. For example, the untreated silica fine powder and the surface-treating agent are fed into a sealed mechanical kneader or fluidized bed apparatus at a normal pressure, and in the presence of an inert gas as necessary, a kneading treatment may be performed at a room temperature (25°C) or under a thermal treatment (heating). In some cases, water or a catalyst (such as a hydrolysis enhancer) may be used for enhancing the surface treatment. After the kneading, the mixture can be dried to manufacture the surface-treated silica fine powder. A blending amount of the surface-treating agent may be any as long as the amount is larger than or equal to an amount calculated from a covering area of the surface-treating agent.

Specific examples of the surface-treating agent include: silazanes such as hexamethyldisilazane; silane coupling agents such as methyltrimethoxysilane, ethyltrimethoxysilane, propyltrimethoxysilane, butyltrimethoxysilane, dimethyldimethoxysilane, diethyldimethoxysilane, vinyltriethoxysilane, vinyltrimethoxysilane, trimethylmethoxysilane, triethylmethoxysilane, vinyltris(methoxyethoxy)silane, trimethylchlorosilane, dimethyldichlorosilane, divinyldimethoxysilane, and chloropropyltrimethoxysilane; polymethylsiloxane; and an organohydrogenpolysiloxane. The silica fine powder may be subjected to the surface treatment with these agents for use as the hydrophobic silica fine powder. The surface-treating agent is particularly preferably the silane coupling agent or the silazanes.

Note that, when the silica fine powder is directly subjected to the surface-hydrophobizing treatment with a surface-treating agent having an alkenyl group in the powder state in advance for use as the silica fine powder of the component (D), the amount thereof is an amount such that the amount of hydrosilyl groups contained in the composition including the component (C) is 1 to 10 mol (or groups), preferably 1.2 to 8 mol (or groups), and more preferably 1.5 to 6 mol (or groups) based on 1 mol (or group) of total alkenyl groups bonded to a silicon atom contained in the composition including the component (A), the component (B), and the surface-treating agent for the component (D).

This is because an amount of the hydrosilyl groups based on 1 mol of the alkenyl groups bonded to a silicon atom in the addition-curable liquid silicone rubber composition for an airbag of less than 1 mol may fail to sufficiently cure the addition-curable liquid silicone rubber composition for an airbag to fail to exhibit sufficient adhesiveness, and meanwhile, an amount of the hydrosilyl groups of more than 10 mol may considerably deteriorate heat resistance of the cured silicone rubber obtained from the addition-curable liquid silicone rubber composition for an airbag.

A blending amount of the component (D) is 1 to 50 parts by mass, preferably 3 to 40 parts by mass, and more preferably 5 to 30 parts by mass based on 100 parts by mass of the organopolysiloxane of the component (A). A blending amount of less than 1 part by mass fails to yield the cured silicone rubber having sufficient strength. A blending amount of more than 50 parts by mass increases the viscosity of the resulting addition-curable liquid silicone rubber composition for an airbag and decreases flowability, which may deteriorate coating operation.

As the silica fine powder of the component (D), one kind thereof may be used singly, or a combination of two or more thereof may be used.

### [Component (E)]

The catalyst for a hydrosilylation reaction of the component (E) enhances an addition reaction mainly between the alkenyl groups bonded to a silicon atom in the component (A) and the component (B), and the hydrosilyl groups in the component (C). This catalyst for a hydrosilylation reaction is not particularly limited, and examples thereof include: platinum-group metals such as platinum, palladium, and rhodium; chloroplatinic acid; alcohol-modified chloroplatinic acids; coordination compounds between chloroplatinic acid and olefins, vinylsiloxane, or an acetylene compound; and platinum-group metal compounds such as tetrakis(triphenylphosphine)palladium and chlorotris(triphenylphosphine)rhodium. The component (E) is preferably a platinum-group metal compound.

As the catalyst for a hydrosilylation reaction of the component (E), one kind thereof may be used singly, or a combination of two or more thereof may be used.

A blending amount of the component (E) is 1 to 500 ppm, and preferably 5 to 100 ppm in terms of a mass based on blending mass of (A) of the catalyst metal element. If this blending amount is less than 1 ppm, the addition reaction becomes considerably slow, or the addition-curable liquid silicone rubber composition for an airbag is not cured, which is not preferred. A blending amount of more than 500 ppm causes a risk of deterioration in heat resistance of the cured silicone rubber.

### [Component (F)]

The component (F) is an organosilicon compound having an adhesiveness-imparting functional group, and added to exhibit and improve adhesiveness of the addition-curable liquid silicone rubber composition for an airbag to the base fabric of the airbag.

The component (F) is an organosilicon compound having, in one molecule, one or more functional groups selected from an epoxy group, an isocyanate group, a (meth)acryl group, and an isocyanurate-ring-containing organic group and having one or more functional groups selected from a hydrosilyl group, an alkoxysilyl group, a hydroxysilyl group, and a vinyl group.

Examples of the epoxy group include: glycidoxyalkyl groups such as a glycidoxypropyl group; and epoxy-group-containing cyclohexylalkyl groups such as a 2,3-epoxycyclohexylethyl group and a 3,4-epoxycyclohexylethyl group. Examples of the isocyanate group include a 3-isocyanatepropyl group. Examples of the (meth)acryl group include a 3-acryloxypropyl group and a 3-methacryloxypropyl group. Examples of the isocyanurate-ring-containing organic group include an organic group derived from triallyl isocyanurate. Examples of the hydrosilyl group include monofunctional R⁴₂HSiO_{1/2}, bifunctional R⁴HSiO_{2/2}, and trifunctional HSiO_{3/2}. Further specific example thereof include: a dimethylhydrosilyl group, a methylphenylhydrosilyl group, and a diphenylhydrosilyl group, which are monofunctional; and a methylhydrosilyl group and a phenylhydrosilyl group, which are bifunctional. Examples of the alkoxysilyl group include: trialkoxysilyl groups such as a trimethoxysilyl group and a triethoxysilyl group; and alkyldialkoxysilyl groups such as a methyldimethoxysilyl group, an ethyldimethoxysilyl group, a methyldiethoxysilyl group, and an ethyldiethoxysilyl group. Examples of the hydroxysilyl group include monofunctional R⁴₂(HO)SiO_{1/2}, bifunctional R⁴(HO)SiO_{2/2}, and trifunctional (HO)SiO_{3/2}. Further specific examples thereof include: a dimethylhydroxysilyl group, a methylphenylhydroxysilyl group, and a diphenylhydroxysilyl group, which are monofunctional; and a methylhydroxysilyl group and a phenylhydroxysilyl group, which are bifunctional. Examples of the vinyl group include monofunctional R⁴₂(CH₂=CH)SiO_{1/2}, bifunctional R⁴(CH₂=CH)SiO_{2/2}, and trifunctional (CH₂=CH)SiO_{3/2}. Further specific examples thereof include: a dimethylvinylsilyl group, a methylphenylvinylsilyl group, and a diphenylvinylsilyl group, which are monofunctional; and a methylvinylsilyl group and a phenylvinylsilyl group, which are bifunctional. Here, the above R⁴ represents a monovalent hydrocarbon group having 1 to 10 carbon atoms.

Examples of the organosilicon compound of the component (F) include: epoxy-group-containing silane coupling agents (namely, epoxy-functional-group-containing organoalkoxysilanes) such as γ-glycidoxypropyltriethoxysilane, γ-glycidoxypropylmethyldiethoxysilane, (3,4-epoxycyclohexylethyl)trimethoxysilane, (3,4-epoxycyclohexylethyl)triethoxysilane, (3,4-epoxycyclohexylethyl)methyldimethoxysilane, (3,4-epoxycyclohexylethyl)methyldiethoxysilane, (2,3-epoxycyclohexylethyl)triethoxysilane, (2,3-epoxycyclohexylethyl)methyldimethoxysilane, and (2,3-epoxycyclohexylethyl)methyldiethoxysilane; (meth)acryl-group-containing silane coupling agents such as 3-acryloxypropyltrimethoxysilane and 3-methacryloxypropyltrimethoxysilane; isocyanate-group-containing silane coupling agents such as 3-isocyanatepropyltriethoxysilane and 3-isocyanatepropyltrimethoxysilane; and isocyanurate-ring-containing silane coupling agents such as an addition reaction product between triallyl isocyanurate and trimethoxysilane.

The major compounds are exemplified below.

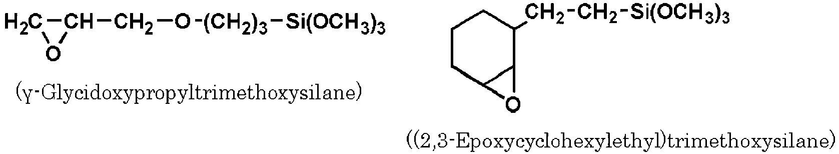

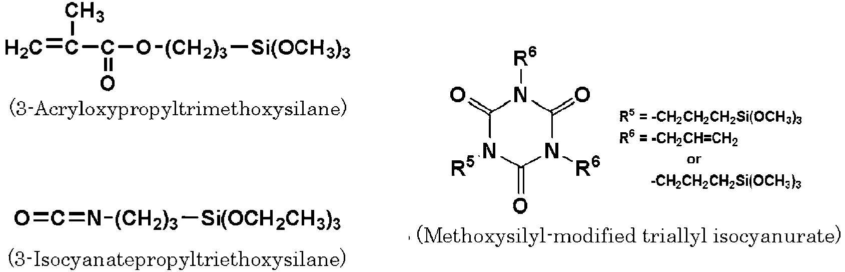

A blending amount of the component (F) is 0.1 to 10 parts by mass, and preferably 0.15 to 5 parts by mass based on 100 parts by mass of the organopolysiloxane of the component (A). If the blending amount is less than 0.1 part by mass, the resulting addition-curable liquid silicone rubber composition for an airbag may fail to exhibit sufficient adhesiveness. If the blending amount is more than 10 parts by mass, thixotropy of the addition-curable liquid silicone rubber composition for an airbag increases to decrease the flowability, which may deteriorate coating operability.

Note that, when the component (F) has an alkenyl group and/or a hydrosilyl group, the blending amount is an amount such that total hydrosilyl groups contained in the composition including the component (C) and the component (F) is 1 to 10 mol (or groups), preferably 1.2 to 8 mol (or groups), and more preferably 1.5 to 6 mol (or groups) based on 1 mol (or group) of total alkenyl groups bonded to a silicon atom contained in the composition including the component (A), the component (B), the component (D), and the component (F).

This is because an amount of the hydrosilyl groups based on 1 mol of the alkenyl groups bonded to a silicon atom in the addition-curable liquid silicone rubber composition for an airbag of less than 1 mol may fail to sufficiently cure the addition-curable liquid silicone rubber composition for an airbag to fail to exhibit sufficient adhesiveness, and meanwhile, an amount of the hydrosilyl groups of more than 10 mol may considerably deteriorate heat resistance of the cured silicone rubber obtained from the addition-curable liquid silicone rubber composition for an airbag.

As the component (F), one kind thereof may be used singly, or a combination of two or more thereof may be used.

### [Component (G)]

The component (G) is an organic compound having one or more epoxy groups per molecule and having no hydrosilyl group and no alkoxysilyl group, and acts as a flame retardancy improver. The component (G) transfers to the base fabric of the airbag after curing of the addition-curable liquid silicone rubber composition for an airbag to improve the flame retardancy due to an interaction with the base fabric of the airbag. Thus, if the component (G) has a hydrosilyl group, which is to be incorporated in the crosslinking structure of the addition-curable silicone rubber for an airbag, or an alkoxysilyl group, which is to be reacted with the reinforcing silica of the component (C), the transfer of the component (G) from the silicone rubber layer (the cured coating) to the base fabric of the airbag after curing does not proceed smoothly, which may consequently fail to provide a sufficient flame retardancy improving effect.

As the component (G), any organic compound satisfying the above requirements may be used, but is preferably one or more selected from: a dehydration condensation product between an alcohol having a hydrocarbon group having 1 to 20 carbon atoms as a substituent and glycidyl alcohol; a dehydrochlorination product between an alcohol having a hydrocarbon group having 1 to 20 carbon atoms as a substituent and epichlorohydrin; a dehydration condensation product between a phenolic hydroxy group having a hydrocarbon group having 6 to 20 carbon atoms as a substituent and glycidyl alcohol; a dehydrochlorination product between a phenolic hydroxy group having a hydrocarbon group having 6 to 20 carbon atoms as a substituent and epichlorohydrin; 1,4-butanediol diglycidyl ether; 1,6-hexanediol diglycidyl ether; neopentyl glycol diglycidyl ether; bisphenol A diglycidyl ether; 1,3,5-tris(2,3-epoxypropyl)-1,3,5-triazine-2,4,6(1H,3H,5H)-trione; a homopolymer or a copolymer of the epoxy compound; and a modified novolac-type epoxy resin.

Here, when the component (G) is powder, it is preferable that a finely crushed product thereof be dispersed in the silicone rubber composition. A common method may be used as the crushing method, and examples thereof include hammer-mill crushing, roll-mill crushing, jet-mill crushing, beads-mill crushing, and ball-mill crushing. At this time, the particle diameter of 50 µm or less can preferably disperse the powder in the silicone rubber composition, and hardly causes coating unevenness during coating on the base fabric of the airbag, which is preferable.

In addition, the component (G) is preferably an organopolysiloxane having an epoxy group that is represented by the following formula (1) or (2).

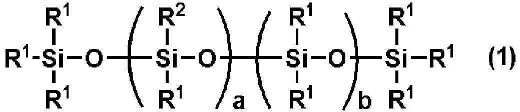

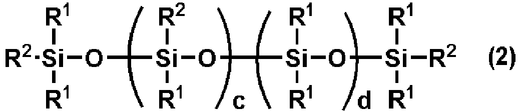

R¹ each independently represents a hydrocarbon group having 1 to 10 carbon atoms, R² each independently represents an epoxy-containing group represented by the following formula (3) or (4), "a" represents an integer of 1 to 200, and "b", "c", and "d" each represent an integer of 0 to 200.

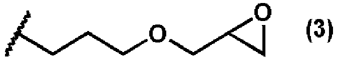

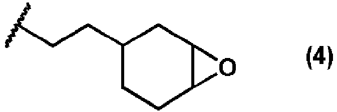

An epoxy equivalent of the component (G) is preferably 50 to 1,000 g/mol, further preferably 80 to 800 g/mol, and further preferably 100 to 500 g/mol. When the epoxy equivalent is 50 g/mol or more, a boiling point of the component (G) rises, and the component (G) is not evaporated or volatilized during heating and curing, which yields a sufficient flame retardancy improving effect. Meanwhile, when the epoxy equivalent is 1,000 g/mol or less, a proportion of the epoxy group in the composition is sufficient, and a sufficient flame retardancy improving effect can be obtained.

A blending amount of the component (G) is 0.1 to 10 parts by mass, preferably 0.15 to 8 parts by mass, and further preferably 0.2 to 5 parts by mass based on 100 parts by mass of the organopolysiloxane of the component (A). If the blending amount is less than 0.1 part by mass, the sufficient flame retardancy improving effect may not be obtained. If the blending amount is more than 10 parts by mass, thixotropy of the resulting composition increases to decrease the flowability, which may deteriorate coating operability.

As the component (G), one kind thereof may be used singly, or a combination of two or more thereof may be used.

### [Other components]

In the addition-curable liquid silicone rubber composition for an airbag according to the present invention, optional components other than the components (A) to (G) may be blended according to the purpose. Specific examples thereof include the following components. As these other components, one kind thereof may be each used singly, or a combination of two or more thereof may be used.

### [Component (H)]

As a component (H), one or more condensation catalysts selected from an organotitanium compound, an organozirconium compound, and an organoaluminum compound may be contained. The component (H) is preferably one or more selected from a titanium alkoxide complex, a titanium chelate complex, a zirconium alkoxide complex, and a zirconium chelate complex, and acts as a condensation catalyst for the adhesiveness-imparting functional group in the component (F) to enhance adhesion.

Specific examples of the component (H) include: titanium alkoxide complexes such as titanium tetraisopropoxide, titanium tetranormalbutoxide, and titanium tetra-2-ethylhexoxide; titanium chelate complexes such as titanium diisopropoxy bis(acetylacetonate), titanium diisopropoxy bis(ethylacetoacetate), and titanium tetraacetylacetonate; zirconium alkoxide complexes such as zirconium tetranormalpropoxide and zirconium tetranormalbutoxide; and zirconium chelate complexes such as zirconium tributoxy monoacetylacetonate, zirconium monobutoxy acetylacetonate bis(ethylacetoacetate), and zirconium tetraacetylacetonate.

The one or more condensation catalysts selected from the organotitanium compound, the organozirconium compound, and the organoaluminum compound of the component (H) are an optional component blended as necessary, and a blending amount thereof is preferably 0.05 to 5 parts by mass, more preferably 0.1 to 4 parts by mass, and particularly preferably 0.1 to 2 parts by mass based on 100 parts by mass of the component (A). The blending amount within the range of 0.05 to 5 parts by mass yields the cured product (the cured coating) obtained from the addition-curable liquid silicone rubber composition for an airbag of the present invention having excellent adhesiveness to the base fabric of the airbag.

As the component (H), one kind thereof may be used singly, or a combination of two or more thereof may be used.

### [Reaction-controlling agent]

The reaction-controlling agent is not particularly limited as long as it is a compound having an effect of inhibiting curing against the catalyst for a hydrosilylation reaction of the component (E), and known compounds may be used. Specific examples thereof include: phosphorus-containing compounds such as triphenylphosphine; nitrogen-containing compounds such as tributylamine, tetramethylethylenediamine, and benzotriazole; sulfur-containing compounds; acetylenic compounds such as acetylene alcohols; compounds having two or more alkenyl groups; hydroperoxide compounds; and maleic acid derivatives.

A degree of the effect of inhibiting curing due to the reaction-controlling agent varies depending on the chemical structure of the reaction-controlling agent, and thus, an addition amount of the reaction-controlling agent is preferably regulated to an optimal amount for each of the used reaction-controlling agent. Adding the reaction-controlling agent at the optimal amount allows the addition-curable liquid silicone rubber composition for an airbag to have excellent long-term storage stability at room temperature and curability.

### [Non-reinforcing filler]

Examples of an addable filler other than the surface-treated silica fine powder of the component (D) include: fillers such as crystalline silica (for example, quartz powder having a specific surface area by a BET method of less than 50 m²/g), carbon black, graphite powder, expanded graphite powder, a hollow filler made of an organic resin, polymethylsilsesquioxane fine powder (so-called silicone resin powder), fumed titanium dioxide, magnesium oxide, zinc oxide, aluminum hydroxide, magnesium carbonate, calcium carbonate, zinc carbonate, diatomaceous earth, talc, and glass fiber; fillers in which these fillers are subjected to a surface-hydrophobizing treatment with an organosilicon compound such as an organoalkoxysilane compound, an organochlorosilane compound, an organosilazane compound, and a low-molecular-weight siloxane compound; silicone rubber powder; and silicone resin powder.

### [Other components]

In addition to the above, an organopolysiloxane having one hydrogen atom bonded to a silicon atom per molecule and having no other functional group, an organopolysiloxane having one alkenyl group bonded to a silicon atom per molecule and having no other functional group, a non-functional organopolysiloxane having none of a hydrogen atom bonded to a silicon atom, an alkenyl group bonded to a silicon atom, and another functional group (so-called dimethylsilicone oil), an organic solvent, a creep-hardening inhibitor, a plasticizer, a thixotropy-imparting agent, a pigment, a dye, an antifungal agent, etc. may be blended, for example.

### <Preparation of addition-curable liquid silicone rubber composition for airbag>

The above components (A) to (G), and component (H), and other components further blended as necessary can be uniformly mixed to prepare the addition-curable liquid silicone rubber composition for an airbag of the present invention.

The addition-curable liquid silicone rubber composition for an airbag obtained as above is a liquid composition at 25°C, and the viscosity at 25°C is preferably 1 to 500 Pa·s, more preferably 2 to 400 Pa·s, and further preferably 5 to 300 Pa·s. The viscosity at 25°C within the above range hardly causes applying unevenness during applying and insufficient adhesiveness to the base fabric after curing on the base fabric of the airbag, and thus, the above composition can be preferably used.

### <Base fabric for airbag>

As the base fabric (the base material composed of fibric cloth) for an airbag on which the silicone rubber layer (the cured film) is to be formed, known materials are typically used. Specific examples thereof include woven fabric of synthetic fibers such as polyamide fibers such as 6,6-nylon, 6-nylon, and aramid fiber, and polyester fibers such as polyethylene terephthalate (PET) and polybutylene terephthalate (PBT).

### <Method for manufacturing airbag>

The addition-curable liquid silicone rubber composition for an airbag of the present invention can be applied on one surface or both surfaces, specifically only one surface, of the base fabric (the base material composed of fibric cloth) for an airbag, and then the composition can be heated and cured with a drying furnace, etc. to form the silicone rubber layer (the cured coating film). The silicone-rubber-coated base fabric of the airbag obtained as above can be used to manufacture the airbag.

Here, a common method can be adopted as a method for coating the base fabric of the airbag with the addition-curable liquid silicone rubber composition for an airbag, and coating with a knife coater is preferable. A thickness of the coating layer (or a surface applying amount) is typically 5 to 100 g/m², and may be preferably 8 to 90 g/m², and more preferably 10 to 80 g/m².

The addition-curable liquid silicone rubber composition for an airbag of the present invention can be cured under a known curing condition by a known curing method. Specifically, the composition can be cured by heating at 100 to 200°C for 1 to 30 minutes, for example.

Methods for processing the base fabric of the airbag having the silicone rubber layer (the cured coating) on one surface or both surfaces (the silicone-rubber-coated base fabric of the airbag) manufactured as above into the airbag include a method in which outer peripheries of two of the above silicone-rubber-coated base fabrics for an airbag are adhered to each other with an adhesive, as the surface coated with the silicone rubber being an inside, and then the adhesive layer is sewn together to produce the airbag. Alternatively, a method in which both outer surfaces of the base fabric of the airbag produced in advance by double-weaving is coated with the addition-curable liquid silicone rubber composition for an airbag at a predetermined coating amount as above, and the composition is cured under a predetermined curing condition may be adopted. Note that a known adhesive may be used as the adhesive used here, but a silicone-type adhesive called "seam sealant" is preferable in terms of an adhesion force, adhesion durability, etc.

### EXAMPLE

Hereinafter, the present invention will be specifically described with showing Preparation Examples, Examples, and Comparative Examples, but the present invention is not limited to the following Examples. Note that the following viscosity and weight average molecular weight (weight average polymerization degree) were values determined under the aforementioned conditions.

The following components were used as the component (A).

(A-1): A linear dimethylpolysiloxane blocked at both terminals of the molecular chain with vinyldimethylsiloxy groups, and having a weight average polymerization degree of 750 and a viscosity of 30,000 mPa·s

(A-2): A linear dimethyl-vinylmethylpolysiloxane blocked at both terminals of the molecular chain with vinyldimethylsiloxy groups, and having a weight average polymerization degree of 450 and a viscosity of 5,000 mPa·s

(A-3) A linear dimethylpolysiloxane blocked at both terminals of the molecular chain with vinyldimethylsiloxy groups, and having a weight average polymerization degree of 200 and a viscosity of 1,000 mPa·s

The following component was used as the component (B).

(B): An organopolysiloxane resin having a three-dimensional network structure composed of 39.5 mol% of a (CH₃)₃SiO_{1/2} unit, 6.5 mol% of a (CH₃)₂(CH₂=CH)SiO_{1/2} unit, and 54 mol% of a SiO₂ unit, and having a weight average molecular weight of 6,000

The following component was used as the component (C).

(C): A linear dimethylsiloxane-methylhydrogensiloxane copolymer blocked at both terminals of the molecular chain with trimethylsiloxy groups, and having a weight average polymerization degree of 20, a number of hydrosilyl groups contained per molecule of 9 in average, and a viscosity of 8 mPa·s (hydrosilyl group content: 0.0089 mol/g)

The following component was used as the component (D).

(D): Silica fine powder having a specific surface area by a BET method of 300 m²/g (trade name: Aerosil 300, manufactured by NIPPON AEROSIL CO., LTD.)

The following component was used as the component (E).

(E): A dimethylpolysiloxane solution containing a chloroplatinic acid/1,3-divinyltetramethyldisiloxane complex at 1 mass% in terms of a platinum atom content

The following component was used as the component (F).

(F): γ-Glycidoxypropyltrimethoxysilane

The following components were used as the component (G).

(G-1): Neopentyl glycol diglycidyl ether (manufactured by Merck Ltd., epoxy equivalent: 108 g/mol)

(G-2): 1,4-Butanediol diglycidyl ether (manufactured by Tokyo Chemical Industry Co., Ltd., epoxy equivalent: 101 g/mol)

(G-3): 2,2-Bis(4-glycidyloxyphenyl)propane (manufactured by Tokyo Chemical Industry Co., Ltd., epoxy equivalent: 170 g/mol) according to the present invention

(G-4): 2-Ethylhexyl glycidyl ether (manufactured by Tokyo Chemical Industry Co., Ltd., epoxy equivalent: 186 g/mol)

(G-5): Cresol-novolac-type epoxy resin EPICRON N-695 (DIC Corporation, epoxy equivalent: 215 g/mol)

(G-6): 1,3,5-Tris(2,3-epoxypropyl)-1,3,5-triazine-2,4,6(1H,3H,5H)-trione TEPIC-S (Nissan Chemical Corporation, epoxy equivalent: 105 g/mol)

(G-7): Epoxy-modified silicone oil KF-101 (manufactured by Shin-Etsu Chemical Co., Ltd., epoxy equivalent: 350 g/mol)

(G-8): Epoxy-modified silicone oil KF-105 (manufactured by Shin-Etsu Chemical Co., Ltd., epoxy equivalent: 490 g/mol)

(G-9): Silicone oil having an epoxy group and a hydrosilyl group, represented by the following formula (5) (epoxy equivalent: 374 g/mol, hydrosilyl group content: 0.57 wt%)

(G-10): Silicone oil having an epoxy group and a hydrosilyl group, represented by the following formula (6) (epoxy equivalent: 233 g/mol, hydrosilyl group content: 0.43 wt%)

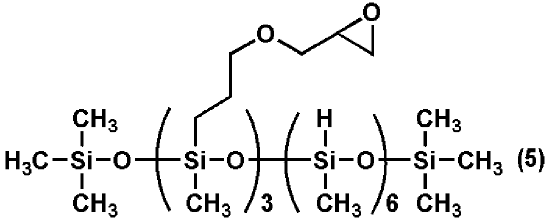

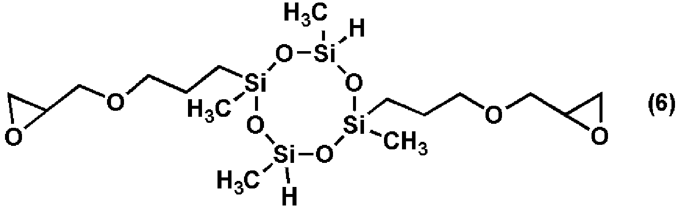

The following component was used as the component (H).

(H): Zirconium tetraacetylacetonate (trade name: ZC-162, manufactured by Matsumoto Fine Chemical Co., Ltd.)

The following component was used as a reaction-controlling agent (the compound (I)).

### (I): 1-Ethynylcyclohexanol

### [Preparation Example 1]

Into a kneader, 60 parts by mass of the base oil (A-1) component, 8 parts by mass of hexamethyldisilazane, 2 parts by mass of water, and 40 parts by mass of the silica fine powder (D) were fed, and the mixture was mixed at room temperature for 1 hour. Thereafter, 8 parts by mass of hexamethyldisilazane was further fed, and the mixture was mixed at room temperature for 1 hour. Then, the temperature was raised to 150°C, and the mixture was continuously mixed for 2 hours. Thereafter, 30 parts by mass of the base oil (A-1) component was added, and the mixture was mixed until the mixture became uniform to obtain a base compound.

### [Examples 1 to 12 and Comparative Examples 1 to 4]

The components were mixed at blending ratios in Tables 1 and 2 with a mixer at room temperature for 30 minutes to prepare addition-curable liquid silicone rubber compositions for an airbag.

**[Table 1]**

| | Component | Example1 | Example2 | Example3 | Example4 | Example5 | Example6 | Example7 | Example8 | Example9 | Example10 | Example11 | Example 12 |
|---|---|---|---|---|---|---|---|---|---|---|---|---|---|
| Base compound | A - 1 | 47.4 | 47.4 | 47.4 | 47.4 | 47.4 | 47.4 | 47.4 | 47.4 | 47.4 | 47.4 | 47.4 | 47.4 |
| | D | 21.1 | 21.1 | 21.1 | 21.1 | 21.1 | 21.1 | 21.1 | 21.1 | 21.1 | 21.1 | 21.1 | 21.1 |
| Base oil | A-2 | 14.3 | 14.3 | 14.3 | 14.3 | 14.3 | 14.3 | 143 | 14.3 | 14.3 | 14.3 | 14.3 | 14.3 |
| | A-3 | 38.3 | 38.3 | 38.3 | 38.3 | 38.3 | 38.3 | 38.3 | 38.3 | 38.3 | 38.3 | 38.3 | 38.3 |
| Organopolysiloxane resin having a three -dimensional network structure | B | 14.3 | 14.3 | 14.3 | 14.3 | 14.3 | 14.3 | 143 | 14.3 | 14.3 | 14.3 | 14.3 | 14.3 |
| Crosslinker | C | 9.7 | 9.7 | 9.7 | 9.7 | 9.7 | 9.7 | 9.7 | 9.7 | 97 | 9.7 | 97 | 9.7 |
| Platinum catalyst | E | 0.26 | 0.26 | 0.26 | 0.26 | 0.26 | 0.26 | 0.26 | 0.26 | 0.26 | 0.26 | 026 | 0.26 |
| Controlling agent | I | 0.05 | 0.05 | 0.05 | 0.05 | 0.05 | 0.05 | 0.05 | 0.05 | 0.05 | 0.05 | 0.05 | 0.05 |
| Adhesion auxiliary | F | 0.32 | 0.32 | 0.32 | 0.32 | 0.32 | 0.32 | 032 | 0.32 | 0.32 | 0.32 | 0.32 | 0.32 |
| Organic compound having epoxy group | G-1 | 0.92 | 0.92 | 0.46 | 0.25 | | | | | | | | |
| | G-2 | | | | | 0.87 | | | | | | | |
| | G-3 | | | | | | 1.45 | | | | | | |
| | G-4 | | | | | | | 1.58 | | | | | |
| | G-5 | | | | | | | | 1.83 | | | | |
| | G-6 | | | | | | | | | 0.85 | | | |
| | G-7 | | | | | | | | | | 2.86 | | |
| | G-8 | | | | | | | | | | | 3.70 | 9.71 |
| Adhesion enhancer | H | | 0.17 | 0.17 | 0.17 | 0.17 | 0.17 | 0.17 | 0.17 | 0.17 | 0.17 | 0.17 | 0.17 |
| Hydrosilyl groups in entire composition / vinyl groups in entire composition | | 4.5 | 45 | 45 | 4.5 | 4.5 | 4.5 | 4.5 | 4.5 | 4.5 | 4.5 | 4.5 | 4.5 |
| Viscosity of composition [mPa s] | | 16 | 18 | 16 | 15 | 16 | 20 | 14 | 12 | 11 | 42 | 39 | 88 |
| Flame retardancy test | Combustion distance [mm] | 16 | 17 | 16 | 18 | 16 | 16 | 16 | 17 | 20 | 20 | 15 | 15 |
| | Combustion time [sec] | 42 | 39 | 30 | 32 | 33 | 39 | 35 | 40 | 41 | 42 | 37 | 36 |
| | Self-extingui shment rate [%] | 100 | 100 | 100 | 100 | 100 | 100 | 100 | 100 | 90 | 90 | 100 | 100 |

**[Table 2]**

| | Component | Comparative Example 1 | Comparative Example2 | Comparative Example3 | Comparative Example4 |
|---|---|---|---|---|---|
| Base compound | A-1 | 47.4 | 47.4 | 47.4 | 47.4 |
| | D | 21.1 | 21.1 | 21.1 | 21.1 |
| Base oil | A-2 | 14.3 | 14.3 | 14.3 | 14.3 |
| | A-3 | 38.3 | 38.3 | 38.3 | 38.3 |
| Organopolysiloxane resin having a three·dimensional network structure | B | 14.3 | 14.3 | 14.3 | 14.3 |
| Crosslinker | C | 9.7 | 6.7 | 7.5 | 9.7 |
| Platinum catalyst | E | 0.26 | 0.26 | 0.26 | 0.26 |
| Controlling agent | I | 0.05 | 0.05 | 0.05 | 0.05 |
| Adhesion auxiliary | F | 0.32 | 0.32 | 0.32 | 2.19 |
| Organic compound having epoxy group | G-9 | | 3.18 | | |
| | G - 1 0 | | | 1.97 | |
| Adhesion enhancer | H | | 0.17 | 0.17 | 0.17 |
| Hydrosilyl groups in entire composition / vinyl groups in entire composition | | 4.5 | 4.5 | 4.5 | 4.5 |
| Viscosity of composition (mPa·s) | | 15 | 45 | 28 | 25 |
| Flame retardancy test | Combustion distance [mm] | 55 | 45 | 41 | 52 |
| | Combustion time [sec] | 84 | 63 | 64 | 80 |
| | Self·extinguishm ent rate [%] | 40 | 50 | 50 | 40 |

### <Method for preparing silicone-rubber-coated base fabric for airbag>

A PA66 base fabric with 210 denier was coated with each of the addition-curable liquid silicone rubber coating compositions for an airbag prepared with Tables 1 and 2 by knife coating with a lab coater available from Mathis AG (trade name; LTE-S) for 20 g/m². Thereafter, the base fabric was placed in a dryer at 200°C for 1 minute, and the addition-curable liquid silicone rubber coating composition for an airbag was cured to prepare a silicone-rubber-coated base fabric of the airbag.

### <Method for flame retardancy test>

In accordance with a method described in Federal Moter Vehicle Safety Standard-302 (FMVSS-302), the flame retardancy was evaluated. Specifically, each of the silicone-rubber-coated base fabrics for an airbag prepared above was cut to a size of 10 cm in width × 35 cm in length. Thereafter, the silicone rubber coating surface was placed upward, and a combustion distance and a combustion time until flame disappeared in combustion in accordance with the method described in FMVSS-302 were measured. Note that a shorter combustion distance and a shorter combustion time are regarded as better flame retardancy. Tables 1 and 2 show average values of the combustion distance and the combustion time measured with N=10. In addition, a self-extinguishment rate (an SE rate) was determined by the following formula, and Tables 1 and 2 show the results. Note that a higher SE rate is regarded as better flame retardancy. 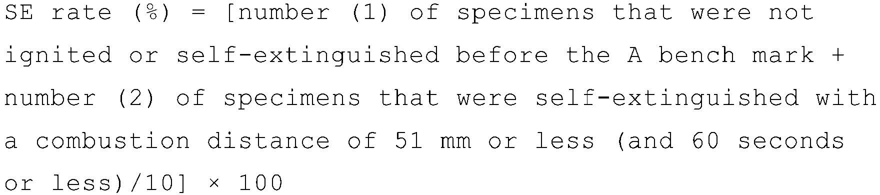 SE rate (%) = [number (1) of specimens that were not ignited or self-extinguished before the A bench mark + number (2) of specimens that were self-extinguished with a combustion distance of 51 mm or less (and 60 seconds or less)/10] × 100

As understood from Table 1, Examples 1 to 12, which used the addition-curable liquid silicone rubber composition for an airbag of the present invention, exhibited short combustion distance and combustion time and a high self-extinguishment rate, which exhibited excellent result of the flame retardancy test.

Meanwhile, as understood from Table 2, Comparative Examples 1 to 4 exhibited long combustion distance and combustion time compared with Examples, and a low self-extinguishment rate, which accordingly exhibited poor flame retardancy. Specifically, from the results of Comparative Example 2 blending the component (G-9) and Comparative Example 3 blending the component (G-10), it has been understood that the organic compound having both a hydrosilyl group and an epoxy group per molecule has a low flame retardancy improving effect. In addition, from the result of Comparative Example 4 containing no component (G) of the present invention and containing a large amount of the component (F), it has been understood that the compound having both an epoxy group and an alkoxysilyl group per molecule has a low flame retardancy improving effect.

The present description includes the following embodiments.
[1] An addition-curable liquid silicone rubber composition for an airbag, the composition comprising the following components (A) to (G) as essential components:
   (A) an organopolysiloxane having two or more alkenyl groups bonded to a silicon atom per molecule and having a polymerization degree of 50 to 2,000:100 parts by mass;
   (B) a powdery organopolysiloxane resin having a three-dimensional network structure: 0.1 to 100 parts by mass;
   (C) an organohydrogenpolysiloxane having two or more hydrosilyl groups per molecule: such that an amount of the hydrosilyl groups contained in the component (C) is 1 to 10 mol per mole of total silicon-atom-bonded alkenyl groups contained in the composition;
   (D) a silica fine powder having a BET-method specific surface area of 50 m²/g or more: 1 to 50 parts by mass;
   (E) a catalyst for a hydrosilylation reaction: 1 to 500 ppm in terms of a mass based on blending mass of (A) of the catalyst metal element;
   (F) an organosilicon compound having, in one molecule, one or more functional groups selected from an epoxy group, an isocyanate group, a (meth)acryl group, and an isocyanurate-ring-containing organic group, and having one or more functional groups selected from a hydrosilyl group, an alkoxysilyl group, a hydroxysilyl group, and a vinyl group: 0.1 to 10 parts by mass; and
   (G) an organic compound having one or more epoxy groups per molecule and having no hydrosilyl group and no alkoxysilyl group: 0.1 to 10 parts by mass.
[2] The addition-curable liquid silicone rubber composition for an airbag of the above [1], wherein the component (G) is one or more selected from: a dehydration condensation product between an alcohol having a hydrocarbon group having 1 to 20 carbon atoms as a substituent and glycidyl alcohol; a dehydrochlorination product between an alcohol having a hydrocarbon group having 1 to 20 carbon atoms as a substituent and epichlorohydrin; a dehydration condensation product between a phenolic hydroxy group having a hydrocarbon group having 6 to 20 carbon atoms as a substituent and glycidyl alcohol; a dehydrochlorination product between a phenolic hydroxy group having a hydrocarbon group having 6 to 20 carbon atoms as a substituent and epichlorohydrin; 1,4-butanediol diglycidyl ether; 1,6-hexanediol diglycidyl ether; neopentyl glycol diglycidyl ether; bisphenol A diglycidyl ether; 1,3,5-tris(2,3-epoxypropyl)-1,3,5-triazine-2,4,6(1H,3H,5H)-trione; a homopolymer or a copolymer of the epoxy compound; and a modified novolac-type epoxy resin.
[3] The addition-curable liquid silicone rubber composition for an airbag of the above [1] or [2], wherein the component (G) is an organopolysiloxane having an epoxy group that is represented by the following formula (1) or (2): 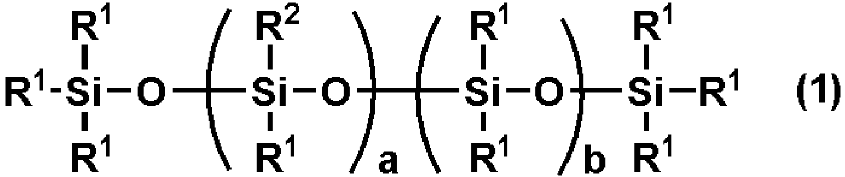 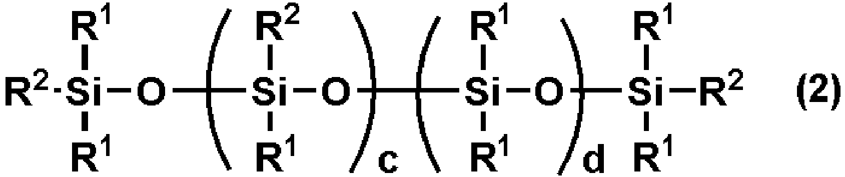 wherein R¹ each independently represents a hydrocarbon group having 1 to 10 carbon atoms, R² each independently represents an epoxy-containing group represented by the following formula (3) or (4), "a" represents an integer of 1 to 200, and "b", "c", and "d" each represent an integer of 0 to 200. 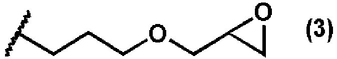 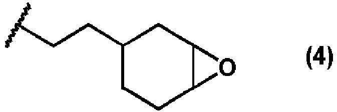
[4] The addition-curable liquid silicone rubber composition for an airbag according to any one of the above [1] to [3], further comprising, as a component (H), one or more condensation catalysts selected from an organotitanium compound, an organozirconium compound, and an organoaluminum compound, in an amount of 0.05 to 5 parts by mass based on 100 parts by mass of the component (A).
[5] An airbag, comprising a cured coating of the addition-curable liquid silicone rubber composition for an airbag according to any one of the above [1] to [4] on a base fabric of the airbag.

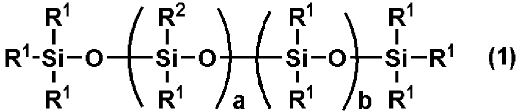

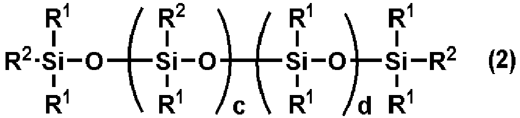

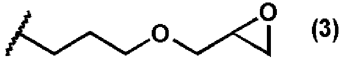

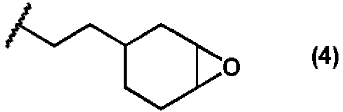

It should be noted that the present invention is not limited to the above-described embodiments. The embodiments are just examples, and any examples that substantially have the same feature and demonstrate the same functions and effects as those in the technical concept disclosed in claims of the present invention are included in the technical scope of the present invention.

## Claims

1. An addition-curable liquid silicone rubber composition for an airbag, the composition comprising the following components (A) to (G) as essential components:
(A) an organopolysiloxane having two or more alkenyl groups bonded to a silicon atom per molecule and having a polymerization degree of 50 to 2,000:100 parts by mass;
(B) a powdery organopolysiloxane resin having a three-dimensional network structure: 0.1 to 100 parts by mass;
(C) an organohydrogenpolysiloxane having two or more hydrosilyl groups per molecule: such that an amount of the hydrosilyl groups contained in the component (C) is 1 to 10 mol per mole of total silicon-atom-bonded alkenyl groups contained in the composition;
(D) a silica fine powder having a BET-method specific surface area of 50 m²/g or more: 1 to 50 parts by mass;
(E) a catalyst for a hydrosilylation reaction: 1 to 500 ppm in terms of a mass based on blending mass of (A) of the catalyst metal element;
(F) an organosilicon compound having, in one molecule, one or more functional groups selected from an epoxy group, an isocyanate group, a (meth)acryl group, and an isocyanurate-ring-containing organic group, and having one or more functional groups selected from a hydrosilyl group, an alkoxysilyl group, a hydroxysilyl group, and a vinyl group: 0.1 to 10 parts by mass; and
(G) an organic compound having one or more epoxy groups per molecule and having no hydrosilyl group and no alkoxysilyl group: 0.1 to 10 parts by mass.

2. The addition-curable liquid silicone rubber composition for an airbag according to claim 1, wherein the component (G) is one or more selected from: a dehydration condensation product between an alcohol having a hydrocarbon group having 1 to 20 carbon atoms as a substituent and glycidyl alcohol; a dehydrochlorination product between an alcohol having a hydrocarbon group having 1 to 20 carbon atoms as a substituent and epichlorohydrin; a dehydration condensation product between a phenolic hydroxy group having a hydrocarbon group having 6 to 20 carbon atoms as a substituent and glycidyl alcohol; a dehydrochlorination product between a phenolic hydroxy group having a hydrocarbon group having 6 to 20 carbon atoms as a substituent and epichlorohydrin; 1,4-butanediol diglycidyl ether; 1,6-hexanediol diglycidyl ether; neopentyl glycol diglycidyl ether; bisphenol A diglycidyl ether; 1,3,5-tris(2,3-epoxypropyl)-1,3,5-triazine-2,4,6(1H,3H,5H)-trione; a homopolymer or a copolymer of the epoxy compound; and a modified novolac-type epoxy resin.

3. The addition-curable liquid silicone rubber composition for an airbag according to claim 1, wherein the component (G) is an organopolysiloxane having an epoxy group that is represented by the following formula (1) or (2): 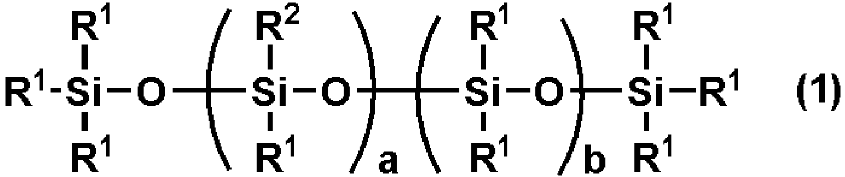 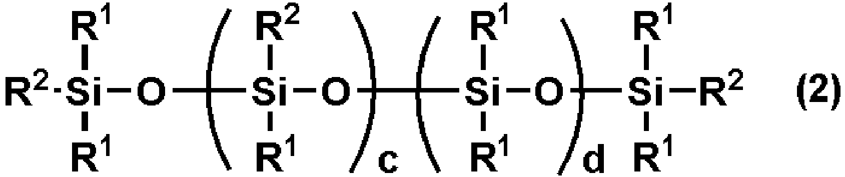 wherein R¹ each independently represents a hydrocarbon group having 1 to 10 carbon atoms, R² each independently represents an epoxy-containing group represented by the following formula (3) or (4), "a" represents an integer of 1 to 200, and "b", "c", and "d" each represent an integer of 0 to 200.

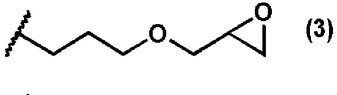

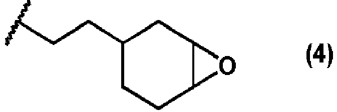

4. The addition-curable liquid silicone rubber composition for an airbag according to claim 1, further comprising, as a component (H), one or more condensation catalysts selected from an organotitanium compound, an organozirconium compound, and an organoaluminum compound, in an amount of 0.05 to 5 parts by mass based on 100 parts by mass of the component (A).

5. An airbag, comprising a cured coating of the addition-curable liquid silicone rubber composition for an airbag according to any one of claims 1 to 4 on a base fabric of the airbag.
